(19) Europäisches Patentamt European Patent Office Office européen des brevets

(11) **EP 4 411 038 A1**

(12) **EUROPEAN PATENT APPLICATION**
published in accordance with Art. 153(4) EPC

(43) Date of publication:
**07.08.2024 Bulletin 2024/32**

(21) Application number: **22876587.1**

(22) Date of filing: **30.09.2022**

(51) International Patent Classification (IPC):
***D01F 6/62*** *(2006.01)*     ***D01F 6/84*** *(2006.01)*
***D01F 6/86*** *(2006.01)*

(52) Cooperative Patent Classification (CPC):
**D01F 6/62; D01F 6/84; D01F 6/86**

(86) International application number:
**PCT/JP2022/036873**

(87) International publication number:
**WO 2023/054725 (06.04.2023 Gazette 2023/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.09.2021 JP 2021160719**

(71) Applicant: **KB Seiren, Ltd.**
**Sabae-shi**
**Fukui 916-0038 (JP)**

(72) Inventors:
• **NARUSAWA Tatsuya**
  **Sabae-shi, Fukui 916-0038 (JP)**
• **NISHIMURA Gen**
  **Sabae-shi, Fukui 916-0038 (JP)**

(74) Representative: **Isarpatent**
**Patent- und Rechtsanwälte**
**Barth Hassa Peckmann & Partner mbB**
**Friedrichstraße 31**
**80801 München (DE)**

(54) **LIQUID CRYSTAL POLYESTER FIBERS AND METHOD FOR PRODUCING SAME**

(57)     Provided is a liquid crystalline polyester fiber capable of achieving improved weatherability without kneading a UV absorber into the fiber or attaching a weatherable UV absorber after fiber spinning. The liquid crystalline polyester is a fiber that consists essentially only of a liquid crystalline polyester, in which the amount of UV absorber used is 5 mass% or less, and the strength retention in the weather fastness test with xenon arc lamp light in accordance with JIS L 0843 is 60% or more.

**Description**

Technical Field

The present invention relates to a liquid crystalline polyester fiber and a production method thereof.

Background Art

As high-strength polyester fibers, liquid crystalline polyester fibers made of aromatic dicarboxylic acids, aromatic diols, and/or aromatic hydroxycarboxylic acids, or derivatives thereof, have been used.

For example, a liquid crystalline polyester polymer containing p-hydroxybenzoic acid, 6-hydroxy-2-naphthalene carboxylic acid, or the like can be melt-spun into fiber form and then subjected to a heating treatment to promote solid-state polymerization, thereby giving a liquid crystalline polyester fiber.

Such liquid crystalline polyester fibers are known to have lower weatherability than ordinary polyester fibers and be unsuitable for use in environments exposed to light, such as outdoors.

For this reason, when used outdoors, such a fiber is used with measures to prevent UV exposure, such as covering with a highly weatherable fiber or covering the outside of the fiber with a weatherable agent.

For example, PTL 1 discloses a method in which a resin composition containing carbon black and a UV absorber is attached to a melt anisotropic polyester fiber using a dip-nip method, and then a substantially additive-free resin is attached by coating.

PTL 2 proposes a melt anisotropic aromatic polyester fiber, in which 0.5 to 10 wt% of a UV absorber is contained in the fiber.

Citation List

Patent Literature

PTL 1: JPH05-287680A
PTL2: JP2015-175075A

Summary of Invention

Technical Problem

However, PTL 1 is problematic in that although weatherability is improved, because a UV absorber is attached in a post-process, the agent is likely to fall off with repeated use, and durability cannot be expected.

PTL 2 is problematic in that because a UV absorber is kneaded into the fiber and thus contained therein, the strength of the fiber decreases.

Therefore, an object of the invention is to solve the above problems and provide a liquid crystalline polyester fiber capable of achieving improved weatherability without kneading a large amount of UV absorber into the fiber or attaching a weatherable UV absorber after fiber spinning.

Solution to Problems

In order to achieve the above object, the present inventors have examined the composition of resins and fiber production methods, and thus arrived at the invention.

The invention is a liquid crystalline polyester fiber, being a fiber including a liquid crystalline polyester, in which

the amount of UV absorber used is 5 mass% or less, and
the strength retention in a weather fastness test with xenon arc lamp light in accordance with JIS L 0891 is 60% or more.

It is preferable that in the liquid crystalline polyester fiber, the degree of entanglement of single fibers is 10 or less.

It is preferable that the liquid crystalline polyester fiber has a total fineness of 600 dtex or less.

It is preferable that the liquid crystalline polyester fiber has a single-yarn fineness of 25 dtex or less.

It is preferable that the liquid crystalline polyester fiber is obtainable by the solid-state polymerization of a liquid crystalline polyester fiber whose surface does not melt at 250°C in 1 hour.

It is preferable that the liquid crystalline polyester is a copolyester composed of 6-hydroxy-2-naphthalene carboxylic acid, terephthalic acid, hydroquinone, and 2,6-naphthalene dicarboxylic acid.

The invention is also a method for producing the liquid crystalline polyester fiber according to any one of the above items, including:

a step (1) of melt-spinning a liquid crystalline polyester resin at a shear rate of $1 \times 10^4$ to $1 \times 10^6$ sec$^{-1}$ and a spinning draft of 5 to 50; and

a step (2) of heat-treating the fiber obtained in step (1) at a temperature of the melting point of the liquid crystalline polyester resin - 60°C to the melting point of the liquid crystalline polyester resin - 10°C to effect solid-state polymerization.

It is preferable that in step (1), a spun fiber obtained by spinning is wound onto a first bobbin, and the spun fiber thus wound is wound onto a second bobbin and subjected to step (2).

(Advantageous Effects of Invention)

According to the invention, it is possible to obtain a liquid crystalline polyester fiber that has high strength and is capable of maintaining weatherability for a long period of time.

Description of Embodiments

Hereinafter, the invention will be described in detail.

The liquid crystalline polyester fiber of the invention is characterized by having a UV absorber content of 5 mass% or less, and also by having a strength retention of 60% or more in a weather fastness test with xenon arc lamp light in accordance with JIS L 0891. That is, the fiber is characterized by having excellent weatherability even when an UV absorber for improving weatherability is used in a reduced amount or not used at all. As a result of this, the liquid crystalline polyester fiber can be provided with stable properties over a long period of time without causing various problems arising when a large amount of UV absorber is used.

In order to achieve such an object, the selection of the liquid crystalline polyester resin to be used, the fiber production conditions, and the like are appropriately adjusted; as a result, the above object is achieved.

<Liquid Crystalline Polyester Resin>

The liquid crystalline polyester fiber of the invention includes

an aromatic dicarboxylic acid, an aromatic diol, and/or an aromatic hydroxycarboxylic acid, or a derivative thereof, and, in some cases, also contains a copolymer thereof with an alicyclic dicarboxylic acid, an alicyclic diol, an aliphatic diol, or a derivative thereof. Here, as aromatic dicarboxylic acids, terephthalic acid, isophthalic acid, 4,4'-dicarboxybiphenyl, 2,6-naphthalene dicarboxylic acid, 1,2-bis(4-carboxyphenoxy)ethane, and the like, optionally with hydrogen in the aromatic ring thereof being substituted with an alkyl, aryl, alkoxy, or halogen group, can be mentioned. As aromatic diols, hydroquinone, resorcinol, 4,4'-dihydroxybiphenyl, 4,4'-dihydroxybenzophenone, 4,4'-dihydroxydiphenylmethane, 4,4'-dihydroxydiphenylethane, 2,2-bis(4-hydroxyphenyl)propane, 4,4'-dihydroxydiphenyl ether, 4,4'-dihydroxydiphenyl sulfone, 4,4'-dihydroxydiphenyl sulfide, 2,6-dihydroxynaphthalene, 1,5-dihydroxynaphthalene, and the like, optionally with hydrogen in the aromatic ring thereof being substituted with an alkyl, aryl, alkoxy, or halogen group, can be mentioned. As aromatic hydroxycarboxylic acids, p-hydroxybenzoic acid, m-hydroxybenzoic acid, 6-hydroxy-2-naphthalene carboxylic acid, 1-hydroxynaphthalene-5-carboxylic acid, and the like, optionally with hydrogen in the aromatic ring thereof being substituted with an alkyl, aryl, alkoxy, or halogen group, can be mentioned. As alicyclic dicarboxylic acids, trans-1,4-dicarboxycyclohexane, cis-1,4-dicarboxycyclohexane, and the like, optionally with hydrogen in the aromatic ring thereof being substituted with an alkyl, aryl, alkoxy, or halogen group, can be mentioned. As alicyclic and aliphatic diols, trans-1,4-dihydroxycyclohexane, cis-1,4-dihydroxycyclohexane, ethylene glycol, 1,4-butanediol, xylylenediol, and the like can be mentioned.

Among these combinations, as preferred aromatic polyesters in the invention, for example, a copolyester composed of 6-hydroxy-2-naphthalene carboxylic acid, terephthalic acid, hydroquinone, and 2,6-naphthalene dicarboxylic acid, etc., can be mentioned.

In particular, a copolyester composed of 50 to 70 mol% of 6-hydroxy-2-naphthalene carboxylic acid, 5 to 7 mol% of terephthalic acid, 10 to 30 mol% of hydroquinone, and 15 to 25 mol% of 2,6-naphthalene dicarboxylic acid is preferable.

In the liquid crystalline polyester fiber of the invention, the amount of UV absorber used is 5 mass% or less based on the fiber mass. That is, even when the amount of UV absorber used is small, the fiber has sufficient weatherability. Therefore, the amount of UV absorber used can also be 0 mass%. The amount of UV absorber used is more preferably 3 mass% or less, and still more preferably 2 mass% or less.

The UV absorber refers to any of those generally used in the field of fibers, and benzophenone-based or benzotriazole-based compounds, titanium oxide- or cerium oxide-based UV absorbers, and the like can be mentioned.

The UV absorber content can be measured by a known method depending on the kind of UV absorber contained. For example, in the case of an inorganic UV absorber such as titanium oxide or cerium oxide, ICP measurement is possible.

In the case where the liquid crystalline polyester fiber of the invention contains a UV absorber, the fiber may have the UV absorber kneaded thereinto, or may also have the UV absorber attached to the surface thereof.

It is preferable that the liquid crystalline polyester fiber of the invention consists essentially only of the liquid crystalline polyester resin. "Consisting essentially only of the liquid crystalline polyester resin" specifically means that the content of the liquid crystalline polyester resin based on the entire fiber is 95 mass% or more, and also means that no other resins or additives are deliberately added. Incidentally, oils, etc., used in the fiber production process are not deliberately added components, and thus a fiber having them attached thereto is encompassed by "consisting essentially only of the liquid crystalline polyester resin."

The liquid crystalline polyester fiber of the invention is a liquid crystalline polyester fiber having a strength retention of 60% or more in a weather fastness test with xenon arc lamp light in accordance with JIS L 0891.

Incidentally, in the test herein, the JIS L 0891 weather fastness test is a value measured under the conditions described in the Examples.

That is, because the weatherability of the fiber meets the above standards, the fiber can be suitably used for applications where durability in particularly severe use environments is required, such as heater wire tension members, ropes, and fishing lines.

The above strength retention of the liquid crystalline polyester fiber of the invention is more preferably 70% or more.

It is preferable that in the liquid crystalline polyester fiber of the invention, the degree of entanglement of single fibers is 10 or less.

The degree of entanglement of single fibers is measured as follows. In accordance with the method for measuring the degree of entanglement of JIS L 1013, a load of 100 g is suspended at a lower position of a fiber to vertically hang the yarn. A hook with a load of 10 g is inserted into the top of the yarn, and, from the drop distance (mm) until the hook stops due to the entanglement of the yarn, the degree of entanglement of single fibers is determined by the following formula. Measurement is performed 50 times, and the average is taken as the degree of entanglement of single fibers. Degree of entanglement of single fibers = 1,000/hook drop distance (mm)

Entanglement of single fibers develops as a result of fibers being fused together due to the softening of fiber surfaces caused by heat during solid-state polymerization. A yarn in which fibers are fused together has low flexibility, and the physical properties such as knot strength are likely to decrease. In addition, after solid-state polymerization in the form of a bobbin package, when the yarn is rewound onto another bobbin, fibrillation originating in fusion occurs, resulting in a decrease in quality. For this reason, it is preferable that the value of the entanglement of single fibers is low as described above.

It is preferable that the strength of the liquid crystalline polyester fiber of the invention measured under the constant rate of extension shown in JIS L 1013 (2010) 8.5.1 Test under Normal Conditions is 20 cN/dtex or more. Further, the strength is more preferably 24 cN/dtex or more, and most preferably 28 cN/dtex or more. As described above, a liquid crystalline polyester fiber containing a UV absorber may have a reduced fiber strength. However, because excellent strength is an important feature of liquid crystalline polyester fibers, it is preferable that the strength is not reduced. It is preferable that the liquid crystalline polyester fiber of the invention does not use a UV absorber, or if it does, the blending amount is such that the above strength range is satisfied.

A liquid crystalline polyester fiber is generally used for applications where high strength is required, and thus is desired to have the above strength. In addition, the liquid crystalline polyester fiber of the invention also has an excellent effect in that weatherability is achieved together with less fusion of single yarns and strength.

It is preferable that the elongation of the liquid crystalline polyester fiber of the invention measured under the constant rate of extension shown in JIS L 1013 (2010) 8.5.1 Test under Normal Conditions is 2 to 5%.

The liquid crystalline polyester fiber of the invention may be a monofilament or a multifilament, but is preferably a multifilament. Although the fiber composition is not particularly limited, it is preferable that the total fineness is 600 dtex or less. Further, it is preferable that the single-yarn fineness is 25 tex or less.

This is preferable because within such ranges, the fiber is suitable for use in various industrial materials.

The total fineness is more preferably 400 dtex or less, and still more preferably 300 dtex or less. The single-yarn fineness is more preferably 10 dtex or less, and still more preferably 5 dtex or less.

The lower limit of the total fineness is not particularly limited, but is preferably 4 dtex. The lower limit of the total fineness is more preferably 10 dtex.

The single-yarn fineness is more preferably 4 dtex or less, and still more preferably 2 dtex or less.

This is preferable because as a result of having the total fineness and single-yarn fineness as described above, the liquid crystalline polyester fiber of the invention is suitable for use in various industrial materials.

It is preferable that the polystyrene-equivalent weight average molecular weight (hereinafter Mw) of the raw material liquid crystalline polyester resin used in the invention is a 30,000 or more, more preferably 50,000 or more. When Mw is 30,000 or more, the resin has appropriate viscosity at the spinning temperature, making it possible to improve the yarn-making properties. The higher the Mw, the higher the strength, elongation, and elastic modulus of the resulting fiber. Further, from the viewpoint of providing excellent fluidity, Mw is preferably less than 250,000, and more preferably less than 150,000. Incidentally, Mw in the invention is a value determined by the method described in the Examples.

In terms of ease of melt spinning and heat resistance, it is preferable that the melting point of the liquid crystalline polyester of the invention is within a range of 200 to 380°C, more preferably 250 to 350°C, and still more preferably 290 to 340°C. Incidentally, the melting point is determined as follows. In differential calorimetry using a differential scanning calorimeter (DSC manufactured by PerkinElmer, Inc.), after the endothermic peak temperature (Tm1) observed during measurement under a temperature rise condition of 20°C/min from 50°C is observed, the temperature is maintained at about Tm1 + 20°C for 5 minutes and then lowered at a temperature fall rate of 20°C/min to 50°C, and measurement is performed again under a temperature rise condition of 20°C/min; the endothermic peak temperature (Tm2) observed at this time was taken as the melting point.

The method for producing a liquid crystalline polyester fiber of the invention is not particularly limited as long as a liquid crystalline polyester fiber having the above properties can be obtained. By adjusting the composition of the resin used and the production method, a fiber that satisfies the above parameters can be obtained.

Specifically, for example, production by the following production method is possible. The production method described in detail hereinafter is also part of the invention.

The method for producing a liquid crystalline polyester fiber of the invention is characterized by including:

a step (1) of melt-spinning a liquid crystalline polyester resin at a shear rate of $1 \times 10^4$ to $1 \times 10^6$ sec$^{-1}$ and a spinning draft of 5 to 50; and
a step (2) of heat-treating the fiber obtained in step (1) at a temperature of the melting point of the liquid crystalline polyester resin - 6°C to the melting point of the liquid crystalline polyester resin - 10°C to effect solid-state polymerization.

That is, the method is characterized in that melt spinning with the above specific shear rate and spinning draft is performed, and, in solid-state polymerization by a heat treatment, heating is performed in a specific temperature range.

The above step (1) can be performed according to a general method for producing a liquid crystalline polyester fiber.

An example of such a method for producing a liquid crystalline polyester fiber will be described in detail hereinafter.

For the extrusion of a resin, it is preferable to use an extruder-type extruding machine. The extruded polymer is weighed by a weighing apparatus and is, after optionally passing through at least one foreign matter removal filter, guided to the nozzle. The foreign matter removal filter is preferably a non-woven metal filter. In addition, it is preferable to use a combination of filters with openings of 1 to 100 μm. Further, it is preferable to use a finer filter on the downstream side. The filter opening on the downstream side is preferably one-half or less, more preferably one-fifth or less, of that on the upstream side.

At this time, it is preferable that the temperature from the polymer pipe to the nozzle (spinning temperature) is the melting point of the liquid crystalline polyester or higher and its thermal decomposition temperature or lower, more preferably the melting point of the liquid crystalline polyester + 10°C or higher and 400°C or less, and still more preferably the melting point of the liquid crystalline polyester + 20°C or higher and 370°C or less. Incidentally, it is also possible to independently adjust the temperature from the polymer pipe to the nozzle. In this case, when the temperature of a portion close to the nozzle is made higher than the temperature on its upstream side, discharge is stabilized.

In the above step (1), the shear rate is preferably within a range of $1 \times 10^4$ to $1 \times 10^6$ sec$^{-1}$. This is preferable because within such a range, uneven orientation of molecular chains is less likely to occur, and the fiber strength is stabilized. More preferably $5 \times 10^4$ to $4 \times 10^5$ sec$^{-1}$. Incidentally, the shear rate (sec$^{-1}$) herein is determined by the following formula.

$$\text{Shear rate} = 4Q/\pi r^3$$

(Note that r is the spinneret hole radius (cm), and Q is the amount of polymer discharged per hole (cm$^3$/sec))

Within the above range, the fiber is sufficiently oriented. Thus, a fine fiber can be easily obtained, and the desired physical properties tend to be easily obtained.

In the above step (1), the spinning draft is 5 or more and 50 or less. This is preferable because when the spinning draft is less than 5, the fiber diameter is likely to be uneven, while in a region where the spinning draft is more than 50, the fiber cannot withstand drafting, and yarn breakage is likely to occur.

Incidentally, the spinning draft is defined as the quotient of the take-up speed divided by the discharge linear speed.

It is preferable that the liquid crystalline polyester fiber in the invention before solid-state polymerization has a surface that does not melt at 250°C in 1 hour. "Surface does not melt at 250°C in 1 hour" means that when the liquid crystalline polyester fiber before solid-state polymerization is treated in a nitrogen atmosphere at 250°C×1 hour, and the fiber bundle is divided into two, fibrillation resulting from single fibers being fused together does not occur. As a result of this, the fusion of single fibers after solid-state polymerization can be extremely reduced. In order to obtain a liquid crystalline polyester fiber that satisfies such a parameter, it is preferable that during the spinning and melting process, shear stress is gradually applied before extrusion from the nozzle.

In step (1) of the method for producing a liquid crystalline polyester fiber of the invention, it is preferable that the shear rate is gradually applied.

In the spinning of a fiber, a flowing resin is pressurized and extruded through the spinneret into fiber form. In the invention, it is preferable to gradually increase the shear rate, rather than rapidly applying the shear rate.

That is, it is preferable to increase the shear rate gradually, rather than rapidly, by adjusting the shape or thickness of the pipe of the equipment, the number of filters, their mesh tightness, and the like. As a result of this, the resin maintains sufficient orientation even in a molten state, and, because melt spinning is performed in this state, the resulting fiber has relatively high orientation even in the state before solid-state polymerization. Further, because of high orientation, the fiber properties are also good.

Further, also by performing the subsequent solid-state polymerization at a relatively low temperature (e.g., the melting point of the raw material liquid crystalline polyester resin - 10°C or lower, more preferably - 15°C or lower, and still more preferably - 20°C or lower), a liquid crystalline polyester fiber with sufficient strength can be obtained. The liquid crystalline polyester fiber obtained by such a method has excellent fiber strength and weatherability, and is less likely to cause interfiber fusion.

It is preferable that the nozzle holes have a hole diameter of 0.05 mm or more and 0.2 mm or less. In order to gradually increase the shear rate to allow solid-state polymerization to be performed at a low temperature as described above, nozzle holes having such a hole diameter are preferable. The lower limit is more preferably 0.1 mm, and still more preferably 0.07 mm. The upper limit is more preferably 0.15 mm, and still more preferably 0.1 mm.

In addition, in order to improve multifilament productivity, the number of holes in one nozzle is preferably 2 or more and 1,000 or less, more preferably 5 or more and 500 or less, and still more preferably 10 or more and 200 or less.

The polymer discharged from the nozzle holes is passed through a heat retention region and a cooling region and thus solidified, and then taken up by a roller (godet roller) that rotates at a constant speed. When the heat retention region is too long, the yarn-making properties deteriorate. Therefore, it is preferable that the heat retention region is up to 400 mm from the nozzle surface, more preferably up to 300 mm, and it is still more preferable that the heat retention region is up to 200 mm. The ambient temperature in the heat retention region can also be raised using a heating means, and the temperature range thereof is preferably 100°C or more and 500°C or less, and more preferably 200°C or more and 400°C or less. Although an inert gas, air, water vapor, and the like can be used for cooling, in terms of reducing the environmental burden, it is preferable to use a parallel or annular air flow.

In order to improve productivity, the take-up speed is preferably 50 m/min or more, more preferably 300 m/min or more, and still more preferably 500 m/min or more. Because the liquid crystalline polyester used in the invention has suitable stringiness at the spinning temperature, the take-up speed can be increased. The upper limit is not particularly limited, but is, in terms of stringiness, about 3,000 m/min in the liquid crystalline polyester used for invention.

In the invention, from the viewpoint of improving yarn-making properties and productivity, in order to obtain the above spinning draft, it is preferable to set the polymer discharge rate at 10 to 2,000 g/min, more preferably 30 to 1,000 g/min, and still more preferably 50 to 500 g/min. By setting the rate at 10 to 2,000 g/min, the liquid crystalline polyester can be provided with good yarn-making properties.

Winding can be performed using a known winding machine onto a cheese-, pirn-, or cone-shaped package, for example, but is preferably cheese winding, which allows the amount of winding to be set high. At the time of winding, it is also possible to use various oils using an oiling roller or an oiling nozzle in order to reduce frictional resistance with guides and rollers.

In order to further improve the strength and elastic modulus, the liquid crystalline polyester fiber thus obtained is preferably subjected to solid-state polymerization in step (2). The fiber can be solid-state polymerized in package form, skein form, or tow form (e.g., placed on a metal mesh or the like and treated), or can also be continuously treated as a yarn between rollers, but package form is preferable because the equipment can be simplified, and also productivity can be improved.

In the method for producing a liquid crystalline polyester fiber of the invention, it is more preferable that from a first bobbin, onto which the spun fiber obtained by spinning in step (1) has been wound, the spun fiber is wound onto a second bobbin and subjected to step (2).

By performing rewinding from the first bobbin, onto which the fiber after spinning is wound, to the second bobbin in this way, the winding density can be reduced, producing a preferable effect in that the solid-state polymerization reaction proceeds easily.

Solid-state polymerization can be performed in an inert gas atmosphere such as nitrogen, in an oxygen-containing active gas atmosphere such as air, or under reduced pressure, but is preferably performed in a nitrogen atmosphere for simplifying the equipment and preventing the fiber or deposits from oxidation. At this time, the solid-state polymerization atmosphere is preferably a low-humidity gas having a dew point of -40°C or less.

The solid-state polymerization temperature is preferably the melting point of the liquid crystalline polyester resin - 60°C or higher. As a result of employing such a high temperature near the melting point, solid-state polymerization proceeds rapidly. The solid-state polymerization temperature can be raised to about the melting point of the liquid crystalline polyester fiber to be subjected to solid-state polymerization - 15°C or the melting point - 10°C. When the temperature exceeds this range, single fibers are fused together during the temperature rise, causing fiber conglutination.

Incidentally, it is more preferable that the solid-state polymerization temperature is raised stepwise or continuously over time because, as a result, the time efficiency of solid-state polymerization can be increased while preventing fusion. At this time, solid-state polymerization is performed for several minutes to several tens of hours depending on the desired performance, but is, in order to obtain a fiber with excellent strength and elastic modulus, preferably performed at the maximum attained temperature (solid-state polymerization temperature) for 5 hours or more, more preferably for 10 hours or more. In addition, because the solid-state polymerization reaction saturates over time, about 100 hours is sufficient.

The package after solid-state polymerization can directly serve as a product. However, in order to increase the efficiency of product transportation, it is preferable to rewind the package after solid-state polymerization again and increase the winding density. For rewinding after solid-state polymerization, in order to prevent the solid-state polymerization package from collapsing due to unwinding, and further suppress fibrillation upon the removal of minor fusion, it is preferable that the yarn is unwound in a direction perpendicular to the rotation axis (in the fiber revolving direction) while rotating the solid-state polymerization package, which is so-called horizontal unwinding. Further, it is preferable that the rotation of the solid-state polymerization package is positively driven rotation, rather than free rotation.

In addition, depending on the purpose, various finishing oils may be applied to the liquid crystalline polyester fiber in the invention.

The liquid crystalline polyester multifilament of the invention can be not only used as a multifilament, but also separated and used as a monofilament, for example, and can also be suitably used as staple fibers, cut fibers, and the like. Further, it can also be utilized as a fiber structure such as a woven fabric, a knitted fabric, a non-woven fabric, or a braided cord.

As specific applications of the liquid crystalline polyester multifilament of the invention, the liquid crystalline polyester fiber of the invention is widely used in the fields of general industrial materials, civil engineering and construction materials, sports applications, protective garments, rubber reinforcing materials, electrical materials (particularly as tension members), acoustic materials, general garments, and the like. As effective applications, it can be used in the fields of screen gauze, filters, ropes, nets, fishing nets, computer ribbons, base fabrics for printed circuit boards, canvas for papermaking, airbags, airships, base fabrics for domes and the like, rider suits, fishing lines, various lines (yachts, paragliders, balloons, kite lines), blind cords, support cords for screen doors, various cords for use in automobiles and aircraft, power transmission cords for electrical products and robots, and the like. Among them, the fiber can be particularly suitably used for applications to heater wire tension members, ropes, fishing lines, and the like.

Examples

Hereinafter, the invention will be described in detail with reference to examples. Incidentally, the invention is not limited to the following examples.

Physical properties and each evaluation in the Examples were performed as follows.

1) Tensile Test (Strength, Elongation, Elastic Modulus)

In accordance with JIS L 1013 (2010), measurement was performed 10 times using a tensile tester RTA-100 manufactured by Orientec Co., Ltd., at a sample length of 200 mm and a tensile speed of 200 mm/min, and the average was employed.

2) Weatherability Evaluation

In accordance with JIS L 0891, a heat-treated yarn was irradiated using a xenon weather meter (Model No.: XEL-1WN) manufactured by Suga Test Instruments Co., Ltd., at an irradiation density of 150 W/m$^2$ (300 to 400 nm), a black panel temperature of 63°C, and a tank internal humidity of 50% RH for 60 hours to perform a light fastness test. From the strength before and after irradiation, strength retention was calculated. Incidentally, the strength here is a strength measured by the method described above in the tensile test. A strength retention of 60% or more was rated as Good, 30% or more and less than 60% was rated as Fair, and less than 30% was rated as Poor.

$$\text{Strength retention} = (\text{strength after irradiation/strength before irradiation}) \times 100$$

3) Degree of Entanglement of Single Fibers

In accordance with the method for measuring the degree of entanglement of JIS L 1013, a load of 100 g is suspended at a lower position of a fiber to vertically hang the yarn. A hook with a load of 10 g is inserted into the top of the yarn, and, from the drop distance (mm) until the hook stops due to the entanglement of the yarn, the degree of entanglement of single fibers is determined by the following formula. Measurement was performed 50 times, and the average was taken as the degree of entanglement.

$$\text{Degree of entanglement of single fibers} = 1,000/\text{hook drop distance}$$

[Example 1]

As an aromatic polyester, an aromatic polyester obtained by polymerizing 55 mol of 6-hydroxy 2-naphthalene carboxylic acid, 5.5 mol of terephthalic acid, 22.5 mol of hydroquinone, and 17 mol of 2,6-naphthalene dicarboxylic acid was used. With respect to the physical properties of this resin, the melting point was 320°C.

This resin was dried in a vacuum dryer at 140°C for 24 hours to a moisture content of 10 ppm, then melt-extruded using a single-screw extruder with a diameter of 25 mm, and weighed using a gear pump, and the resin was fed to the spinning pack. At this time, the spinning temperature from the extruder outlet to the spinning pack was 360°C.

In the spinning pack, two types of non-woven metal filters having different filter hole sizes were disposed. The hole size on the upstream side was 50 μm, and the hole size on the downstream side was 10 μm. The resin was discharged at a discharge rate of 15 g/min (0.3125 cc/min per hole) through a spinneret having 48 holes with a hole diameter of 0.09 mm and a land length of 0.27 mm. The discharged resin was gradually cooled and solidified, then an oil was applied, and 48 filaments were all wound at 700 m/min. The shear rate at this time was 72,500 sec$^{-1}$, and the spinning draft was 17. During winding for about 120 minutes, yarn breakage did not occur, and the yarn-making properties were good. Next, the fiber was rewound from the spinning winding bobbin to a heat treatment bobbin at 300 m/min. During rewinding of 100,000 m, no single-yarn breakage or yarn breakage occurred, and it was possible to perform rewinding well with good operability. This fiber was treated in nitrogen at 300°C for 10 hours, thereby giving a fiber having a total fineness of 220.3 dtex, a single-yarn fineness of 4.6 dtex, a strength of 28.5 cN/dtex, an elongation of 4.0%, and an elastic modulus of 550 cN/dtex.

[Example 2]

A resin was spun and heat-treated in the same manner as in Example 1, except that instead of winding all 48 filaments, every six filaments were separated into eight and wound, thereby giving a fiber having a total fineness of 27.8 dtex, a single-yarn fineness of 4.6 dtex, a strength of 29.5 cN/dtex, an elongation of 3.8%, and an elastic modulus of 550 cN/dtex.

[Example 3]

A resin was spun and heat-treated in the same manner as in Example 1, except that winding was performed at a winding speed set at 1,400 m/min, thereby giving a fiber having a total fineness of 110.3 dtex, a single-yarn fineness of 2.3 dtex, a strength of 27.6 cN/dtex, an elongation of 3.8%, and an elastic modulus of 560 cN/dtex.

[Example 4]

A resin was spun and heat-treated in the same manner as in Example 1, except that in the spinning pack, non-woven metal filters having a hole size of 30 μm and a hole size of 10 μm were used on the upstream side and on the downstream side, respectively, thereby giving a fiber. The physical properties of the obtained fiber are shown in Table 1.

[Comparative Example 1]

An aromatic polyester (melting point: 290°C) obtained by polymerizing 73 mol of p-hydroxybenzoic acid and 27 mol of 6-hydroxy 2-naphthalene carboxylic acid was used as an aromatic polyester, and the heat treatment temperature was 280°C; in otherwise the same manner as in Example 1, a fiber having a total fineness of 220.5 dtex, a single-yarn fineness of 4.6 dtex, a strength of 23.8 cN/dtex, an elongation of 3.3%, and an elastic modulus of 635 cN/dtex was obtained.

[Comparative Example 2]

An aromatic polyester (melting point: 310°C) obtained by polymerizing 60 mol of p-hydroxybenzoic acid, 20 mol of biphenol, 5 mol of isophthalic acid, and 15 mol of terephthalic acid was used as an aromatic polyester; in otherwise the same manner as in Example 1, a fiber having a total fineness of 220.8 dtex, a single-yarn fineness of 4.6 dtex, a strength of 23.7 cN/dtex, an elongation of 2.5%, and an elastic modulus of 1,028 cN/dtex was obtained.

[Comparative Example 3]

A resin was spun and heat-treated in the same manner as in Example 1, except that a non-woven metal filter having a hole size of 10 μm was used in the spinning pack, thereby giving a fiber. The physical properties of the obtained fiber are shown in Table 1.

[Comparative Example 4]

A resin was spun in the same manner as in Example 1, and the fiber was treated in nitrogen at 320°C for 10 hours, thereby giving a fiber. The physical properties of the obtained fiber are shown in Table 1.

[Comparative Example 5]

A resin was spun and heat-treated in the same manner as in Example 1, except that in the spinning pack, the filter hole size on the upstream side and the filter hole size on the downstream side were 10 μm, thereby giving a fiber. The physical properties of the obtained fiber are shown in Table 1.

[Comparative Example 6]

A fiber was obtained in the same manner as in Comparative Example 1, except that 3 mass% of a UV absorber was added to the aromatic polyester resin of Comparative Example 1 and spun. The physical properties of the obtained fiber are shown in Table 1.

[Example 5]

A fiber was obtained in the same manner as in Comparative Example 1, except that 3 mass% of a UV absorber was added to the aromatic polyester resin of Example 1 and spun. The physical properties of the obtained fiber are shown in Table 1. Incidentally, for "With or Without Melting at 250°C × 1h", "Good" was given to those whose "surface does not melt at 250°C in 1 hour", and "Poor" was given to others.

[Comparative Example 7]

A resin was spun in the same manner as in Comparative Example 3, and the fiber was treated in nitrogen at 320°C for 10 hours, thereby giving a fiber. The physical properties of the obtained fiber are shown in Table 1.

[Table 1]

| | Filter in Nozzle (μm) | | Amount of UV Absorb-er Add-ed (mass%) | ginning Fine-ness (dtex) | Number of Fila-ments | Single-Yarn Fine-ness (dtex) | With or With-out Melting at 250°C × 1 h | Heat Treat-ment Tem-perature (°C) | Fiber Physical Properties after Heat-Treatment | | | | Degree of Entangle-ment of Sin-gle Fibers | Weatherability Evaluation | | |
| | Up-stream Side | Down-stream Sde | | | | | | | Total Fine-ness (dtex) | Strengt h (cN/dt) | Elonga-tion (%) | Elastic Modu-lus (cN/ dtex) | | Strength after Irra-diation (cN/dtex) | Strengt h reten-tion (%) | Evalua-tion |
|---|---|---|---|---|---|---|---|---|---|---|---|---|---|---|---|---|
| Example 1 | 50 | 10 | 0 | 220 | 48 | 4.6 | Good | 300 | 220.3 | 28.5 | 4.0 | 550 | 21 | 21.5 | 75.4 | Good |
| Example2 | 50 | 10 | 0 | 28 | 6 | 4.6 | Good | 300 | 27.8 | 29.5 | 3.8 | 550 | 1.5 | 20.7 | 70.2 | Good |
| Examples | 50 | 10 | 0 | 110 | 48 | 2.3 | Good | 300 | 110.3 | 27.6 | 3.8 | 560 | 3.5 | 180 | 65.2 | Good |
| Example4 | 30 | 10 | 0 | 220 | 48 | 4.6 | Good | 300 | 220.1 | 29.1 | 4.0 | 550 | 2.3 | 21.4 | 73.5 | Good |
| Compara-tive Exam-ple 1 | 50 | 10 | 0 | 220 | 48 | 4.6 | Good | 280 | 220.5 | 23.8 | 3.3 | 635 | 1.6 | 10.1 | 42.4 | Fair |
| Comparative Example2 | 50 | 10 | 0 | 220 | 48 | 4.6 | Good | 300 | 220.8 | 23.7 | 2.5 | 1028 | 4.8 | 1.9 | 8.0 | Fbor |
| Compara-tive Exam-ples | - | 10 | 0 | 220 | 48 | 4.6 | Poor | 300 | 220.4 | 28.3 | 3.9 | 540 | 18.2 | 15.2 | 53.7 | Fair |
| Comparative Example4 | 50 | 10 | 0 | 220 | 48 | 4.6 | Good | 320 | 221.1 | 30.5 | 4.2 | 560 | 25.3 | 14.8 | 48.5 | Fair |
| Compara-tive Exam-ples | 10 | 10 | 0 | 220 | 48 | 4.6 | Poor | 300 | 220.3 | 27.5 | 3.8 | 530 | 15.9 | 15.2 | 55.3 | Fair |
| Compara-tive Exam-ples | 50 | 10 | 3 | 220 | 48 | 4.6 | Good | 280 | 220.1 | 17.5 | 2.9 | 547 | 1.6 | 8.3 | 47.4 | Fair |
| Example5 | 50 | 10 | 3 | 220 | 48 | 4.6 | Good | 300 | 220.0 | 21.8 | 3.7 | 520 | 4.5 | 17.4 | 79.8 | Good |

| | Filter in Nozzle (μm) | | Amount of UV Absorber Added (mass%) | ginning Fineness (dtex) | Number of Filaments | Single-Yarn Fineness (dtex) | With or Without Melting at 250°C × 1 h | Heat Treatment Temperature (°C) | Fiber Physical Properties after Heat-Treatment | | | | Degree of Entanglement of Single Fibers | Weatherability Evaluation | | |
| | Up-stream Side | Down-stream Sde | | | | | | | Total Fineness (dtex) | Strength (cN/dt) | Elongation (%) | Elastic Modulus (cN/dtex) | | Strength after Irradiation (cN/dtex) | Strength retention (%) | Evaluation |
|---|---|---|---|---|---|---|---|---|---|---|---|---|---|---|---|---|
| Comparative Example7 | - | 10 | 0 | 220 | 48 | 4.6 | Poor | 320 | 221.1 | 29.6 | 4.2 | 560 | 29.5 | 13.5 | 45.6 | Fair |

As is clear from the results in Table 1 above, the fibers of the examples have excellent fiber physical properties in terms of strength. Also in the weather fastness test using a xenon weather meter, the obtained physical properties indicate high strength retention. Then, the weather fastness is excellent even without kneading a large amount of UV absorber or attaching a weatherable UV absorber after fiber spinning. In addition, the fibers of the examples have excellent fiber physical properties in terms of the degree of entanglement of single fibers, and the obtained fibers are high-quality in that even after a heat treatment for solid-state polymerization, single fibers are not fused together.

The fibers of Comparative Examples 1, 3 to 7 had poor strength retention in the weather fastness test, and the fibers of Comparative Example 2 had significantly poor weatherability. In addition, the fibers of Comparative Examples 4 and 5 had a high degree of entanglement of single fibers, and the fibers of Comparative Example 7 showed fiber conglutination due to fusion of single fibers.

(Industrial Applicability)

The liquid crystalline polyester fiber of the invention can be particularly suitably used for applications where weatherability is required, and, specifically, for example, can be particularly suitably used for applications to heater wire tension members, ropes, fishing lines, and the like.

**Claims**

1. A liquid crystalline polyester fiber, being a fiber comprising a liquid crystalline polyester, wherein

   the amount of UV absorber used is 5 mass% or less, and
   the strength retention in a weather fastness test with xenon arc lamp light in accordance with JIS L 0891 is 60% or more.

2. The liquid crystalline polyester fiber according to claim 1, wherein the degree of entanglement of single fibers is 10 or less.

3. The liquid crystalline polyester fiber according to claim 1 or 2, having a total fineness of 600 dtex or less.

4. The liquid crystalline polyester fiber according to any one of claims 1 to 3, having a single-yarn fineness of 25 dtex or less.

5. The liquid crystalline polyester fiber according to any one of claims 1 to 4, obtainable by the solid-state polymerization of a liquid crystalline polyester fiber whose surface does not melt at 250°C in 1 hour.

6. The liquid crystalline polyester fiber according to any one of claims 1 to 5, wherein the liquid crystalline polyester is a copolyester composed of 6-hydroxy-2-naphthalene carboxylic acid, terephthalic acid, hydroquinone, and 2,6-naphthalene dicarboxylic acid.

7. A method for producing a liquid crystalline polyester fiber, being a method for producing the liquid crystalline polyester fiber according to any one of claims 1 to 6,
   the method comprising:

   a step (1) of melt-spinning a liquid crystalline polyester resin at a shear rate of $1 \times 10^4$ to $1 \times 10^6$ sec$^{-1}$ and a spinning draft of 5 to 50; and
   a step (2) of heat-treating the fiber obtained in step (1) at a temperature of the melting point of the liquid crystalline polyester resin - 60°C to the melting point of the liquid crystalline polyester resin - 10°C to effect solid-state polymerization.

8. The method for producing a liquid crystalline polyester fiber according to claim 7, wherein in step (1), a spun fiber obtained by spinning is wound onto a first bobbin, and the spun fiber thus wound is wound onto a second bobbin and subjected to step (2).

<table>
<tr><td colspan="2" align="center"><strong>INTERNATIONAL SEARCH REPORT</strong></td><td>International application No.<br><br><strong>PCT/JP2022/036873</strong></td></tr>
</table>

**A.  CLASSIFICATION OF SUBJECT MATTER**

*D01F 6/62*(2006.01)i; *D01F 6/84*(2006.01)i; *D01F 6/86*(2006.01)i
FI:  D01F6/62 308; D01F6/84 311; D01F6/86 307

According to International Patent Classification (IPC) or to both national classification and IPC

**B.  FIELDS SEARCHED**

Minimum documentation searched (classification system followed by classification symbols)

D01F1/00-6/96; D01F9/00-9/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| Y | JP 2021-14645 A (KURARAY CO., LTD.) 12 February 2021 (2021-02-12)<br>claim 1, paragraphs [0009], [0013]-[0031],[0040]-[0042], [0066] | 1-8 |
| Y | WO 2019/142692 A1 (SUMITOMO CHEMICAL CO., LTD.) 25 July 2019 (2019-07-25)<br>claim 1, paragraphs [0047], [0050], [0067]-[0097], fig. 1 | 1-8 |
| Y | JP 2008-240228 A (TORAY IND., INC.) 09 October 2008 (2008-10-09)<br>paragraphs [0001], [0019]-[0084] | 1-8 |
| A | JP 2011-168933 A (KURARAY CO., LTD.) 01 September 2011 (2011-09-01)<br>whole document | 1-8 |
| A | JP 2008-214842 A (TORAY IND., INC.) 18 September 2008 (2008-09-18)<br>whole document | 1-8 |
| A | JP 9-256240 A (TORAY IND., INC.) 30 September 1997 (1997-09-30)<br>whole document | 1-8 |

☐ Further documents are listed in the continuation of Box C.    ☑ See patent family annex.

| | |
|---|---|
| *  Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **04 November 2022** | **15 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/036873**

| Patent document cited in search report | | | Publication date (day/month/year) | Patent family member(s) | Publication date (day/month/year) |
|---|---|---|---|---|---|
| JP | 2021-14645 | A | 12 February 2021 | (Family: none) | |
| WO | 2019/142692 | A1 | 25 July 2019 | US 2021/0061948 A1 claim 1, paragraphs [0086]-[0092], [0095], [0096], [0116], [0162], fig. 1 CN 111566267 A | |
| JP | 2008-240228 | A | 09 October 2008 | US 2010/0104870 A1 paragraphs [0001], [0118]-[0169] WO 2008/105439 A1 EP 2123807 A1 CN 101622384 A KR 10-2009-0115227 A | |
| JP | 2011-168933 | A | 01 September 2011 | (Family: none) | |
| JP | 2008-214842 | A | 18 September 2008 | (Family: none) | |
| JP | 9-256240 | A | 30 September 1997 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H05287680 A

- JP 2015175075 A